# FASCICULE DE BREVET EUROPEEN

(11) **EP 3 431 241 B1**
(45) Date de publication et mention de la délivrance du brevet: **02.09.2020**
(21) Numéro de dépôt: 17181836.2
(22) Date de dépôt: 18.07.2017
(51) Int. Cl.: B28D 5/00, B28D 5/04

(54) **PROCÉDÉ DE DÉCOUPE DE BOULE CRISTALLINE AU FIL DIAMANTÉ**
VERFAHREN ZUM SCHNEIDEN EINER KRISTALLKUGEL MIT DIAMANTDRAHT
METHOD OF CUTTING A CRYSTALLINE BOULE WITH A DIAMOND WIRE

(43) Date de publication de la demande: 23.01.2019
(73) Titulaire: Comadur S.A., 2400 Le Locle (CH)
(72) Inventeur: Berisha, Naser, 5430 Wettingen (CH); Dechant-Wagner, Roland, 78056 Villingen-Schwenningen (DE); Russi, Christian, 2400 Le Locle (CH)
(74) Mandataire: ICB SA

(56) Documents cités:
- WO-A1-2010/009881
- DE-A1-102004 043 718

## Description

### Domaine de l'invention

L'invention concerne un procédé de découpe d'au moins une boule cristalline au fil de découpe, notamment diamanté, pour réaliser des plateaux cristallins.

L'invention concerne le domaine de la confection de composants cristallins pour l'horlogerie, la bijouterie, ou la joaillerie, et plus particulièrement de composants inscrits entre deux faces parallèles, tels que glaces de montres ou similaires.

### Arrière-plan de l'invention

La découpe de boules cristallines est une opération délicate, en raison de la difficulté de maintien de ces matériaux bruts qui ne sont pas de forme régulière. Leur dureté impose une découpe avec du fil diamanté. La découpe est une opération chère, qui de surcroît est très sensible aux vibrations, ainsi qu'aux éventuelles impuretés rencontrées. Il est, de plus, difficile de réaliser des disques à faces bien parallèles, et dépourvues de rayures ou sillons.

Le document DE10 2004 043 718 A1 au nom de SILTRONIC décrit un procédé pour couper des plaquettes à partir de tiges ou de cristal de matériau fragile, par exemple un cristal semi-conducteur, avec deux ou plusieurs pièces disposées sur un montage rotatif présenté face à une scie à diamant avec un certain nombre de fils parallèles. Le porte-pièce tourne autour d'un axe central et est monté sur un entraînement d'indexage pour alimenter les pièces sur la scie. L'action de coupe globale résulte de la combinaison de l'entraînement de la scie alternative et de l'entraînement rotatif du porte-outil. En particulier ce document décrit un procédé de découpe d'au moins une boule cristalline au fil diamanté, comprenant les étapes suivantes: on détermine un axe de boule perpendiculairement auquel on choisit de trancher ladite au moins une boule avec un rayon de boule, on entraîne ladite boule autour d'un axe principal parallèle audit axe de boule, on tend et entraîne un fil de découpe selon un segment de droite dans un plan perpendiculaire audit axe principal, on réalise un tambour provisoire immobilisant ladite au moins une boule en position par rapport audit axe principal pendant toute l'opération de découpe, au cours de laquelle on fait passer ledit axe de boule de part et d'autre dudit segment de droite pendant la découpe de ladite au moins une boule au sein dudit tambour provisoire, où on réalise ledit tambour provisoire sur la base d'une âme sacrificielle constituée par un tube ou cylindre axial, d'axe de révolution confondu avec ledit axe principal, et de rayon égal à la différence entre ladite excentricité et ledit rayon de boule, sur laquelle âme sacrificielle on colle, après préparation, chaque dite boule de façon orientée et avec son axe de boule parallèle audit axe principal, pour réaliser un ensemble collé, où, après collage desdites boules sur ladite âme sacrificielle, on insère ledit ensemble collé dans une enveloppe dans laquelle on surmoule ledit ensemble avec un matériau d'enrobage, pour réaliser un ensemble surmoulé, puis on ôte ledit ensemble surmoulé de ladite enveloppe.

Le document WO 2010/009881 A1 au nom de MEYER BURGER AG décrit aussi un dispositif de coupe multifilaire avec un porte-pièce rotatif, et un procédé pour couper des substrats solides, par exemple prévus pour être utilisés comme plaquettes dans les semi-conducteurs, photovoltaïques, optiques, céramiques, électriques, et pour l'industrie magnéto-technique.

### Résumé de l'invention

L'invention se propose de mettre au point un procédé maîtrisant l'opération de découpe de boules cristallines, autorisant la découpe simultanée de plusieurs boules cristallines, assurant la maîtrise du coût de production notamment en termes d'économie de fil diamanté et de temps de coupe, et garantissant un produit bien fini.

A cet effet, l'invention concerne un procédé de découpe d'au moins une boule cristalline selon la revendication 1.

### Description sommaire des dessins

D'autres caractéristiques et avantages de l'invention apparaîtront à la lecture de la description détaillée qui va suivre, en référence aux dessins annexés, où :

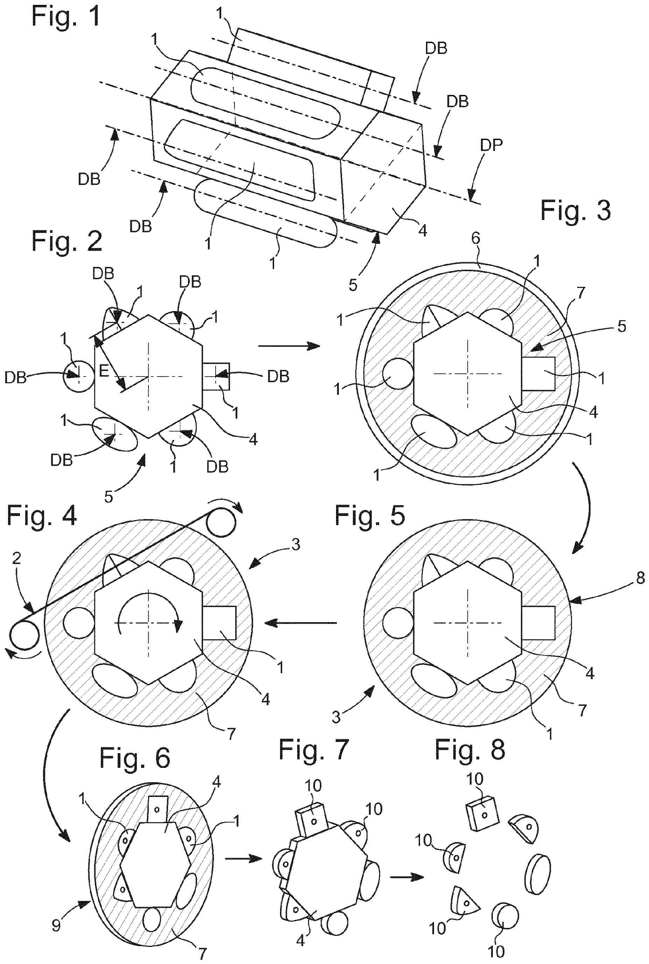

- la figure 1 représente, de façon schématisée, et en perspective, un ensemble collé comportant une âme sacrificielle autour de laquelle sont collées plusieurs boules cristallines brutes après une préparation superficielle;
- la figure 2 représente, de façon schématisée, et en vue de bout, l'ensemble collé de la figure 1 ;
- la figure 3 représente, de façon similaire à la figure 2, le même ensemble collé, inséré dans une enveloppe servant de moule, dans laquelle il est surmoulé avec un matériau d'enrobage ;
- la figure 4 représente, de façon similaire à la figure 3, l'ensemble surmoulé après le surmoulage de la figure 3 et éloignement de l'enveloppe, et après une stabilisation thermique, où il constitue un tambour provisoire prêt à être découpé ;
- la figure 5 représente, de façon similaire à la figure 4, l'opération de découpe de ce tambour provisoire au travers duquel circule un fil de découpe représenté, de façon simplifiée, entre deux galets ;
- la figure 6 représente, de façon schématisée, et en perspective, un anneau tronçonné obtenu, après la fin de l'opération de découpe, par tronçonnage des éléments subsistants de l'âme sacrificielle et du matériau d'enrobage, pour le séparer complètement du reste du tambour provisoire ;
- la figure 7 représente, de façon schématisée, et en perspective, ce qui reste de cet anneau tronçonné après élimination du reste du matériau d'enrobage ;
- la figure 8 représente, de façon schématisée, et en perspective, les plateaux cristallins subsistant après élimination de la colle et du reste de l'âme sacrificielle.

### Description détaillée des modes de réalisation préférés

L'invention concerne un procédé de découpe d'au moins une boule cristalline 1, de type boule saphir ou similaire, au fil de découpe diamanté, pour réaliser des plateaux cristallins 10.

Plus particulièrement, on détermine un axe de boule DB, perpendiculairement auquel on choisit de trancher cette au moins une boule 1, avec un rayon de boule RB.

Ce rayon de boule RB détermine la dimension du plateau cristallin 10 issu de la découpe, et donc des produits qui en seront extraits, tels que glaces de montre ou similaires.

Pour effectuer la découpe, on entraîne cette boule 1 autour d'un axe principal DP parallèle à cet axe de boule DB. Plus particulièrement cet axe principal DP est distant de cet axe de boule DB d'une excentricité E supérieure au rayon de boule RB.

On tend et entraîne un fil de découpe 2 selon un segment de droite dans un plan perpendiculaire à cet axe principal DP, et notamment mais non limitativement entre une position d'accostage où le fil de découpe 2 est distant de l'axe principal DP d'une valeur qui est égale à la somme de l'excentricité E et du rayon de boule RB, et une position de séparation où le fil de découpe 2 est distant de l'axe principal DP d'une valeur égale à la différence entre l'excentricité E et le rayon de boule RB.

De façon propre à l'invention, on réalise un tambour provisoire 3 immobilisant cette au moins une boule 1 en position par rapport à l'axe principal DP pendant toute l'opération de découpe, au cours de laquelle on fait passer l'axe de boule DB de part et d'autre du segment de droite matérialisant le fil de découpe 2 pendant la découpe de cette au moins une boule 1 au sein du tambour provisoire 3.

De façon particulière, on met en rotation le tambour provisoire 3 pendant la découpe au fil diamanté 2. Plus particulièrement sa vitesse de rotation est constante, et la vitesse de défilement du fil diamanté 2 est également constante.

Plus particulièrement, et de façon non limitative, le segment de droite correspondant à l'engagement du fil de découpe 2 dans le tambour provisoire 3, à un instant donné, est perpendiculaire à une radiale issue de l'axe principal DP, avec lequel coïncide l'axe du tambour, et ce segment est symétrique par rapport à cette radiale.

Plus particulièrement, on réalise ce tambour provisoire 3 agencé pour la découpe simultanée d'une pluralité de telles boules 1, chacune agencée radialement de la même façon par rapport à l'axe principal DP.

Selon l'invention, on réalise ce tambour provisoire 3 sur la base d'une âme sacrificielle 4, constituée, non limitativement, par un tube ou cylindre axial, ou similaire, d'axe de révolution confondu avec l'axe principal DP, et de rayon égal à la différence entre l'excentricité E et le rayon de boule RB. Et, après une préparation adéquate, on colle, sur cette âme sacrificielle 1, chaque boule 1 de façon orientée et avec son axe de boule DB parallèle à l'axe principal DP, pour réaliser un ensemble collé 5.

Dans une autre variante particulière et nullement limitative, on met en œuvre le collage avec un produit du commerce, par exemple une colle bi-composants, constituée d'une résine époxyde et d'un agent polymérisant, tel que le 1,4,7,10-tétraazadécane, formant ensemble un polyépoxyde après mélange et polymérisation, notamment dans la famille de produits «Araldite» de « Huntsman® ».

Dans une autre variante particulière non limitative, on met en œuvre le collage avec un autre produit du commerce, par exemple un adhésif anaérobie « Loctite® 641 » de « Henkel® », qui est un ester méthacrylate, utilisable jusqu'à 150°C, et qui est fusible très facilement à 250°C, par exemple par un soufflage d'air chaud, ou similaire.

Dans une application particulière, la boule 1 s'étend longitudinalement et a une forme sensiblement cylindrique, du moins dans sa partie centrale; l'axe de boule DB est alors l'axe de ce cylindre.

Plus particulièrement, les boules 1 sont collées sensiblement parallèlement les unes aux autres, avec une distance entre elles si possible comprise entre 4 mm et 6mm.

Dans une application particulière pour la fabrication de composants horlogers, le diamètre extérieur du tambour provisoire 3 est de 240 mm, et la profondeur de coupe est comprise entre 30 mm et 55 mm dans le tambour 3, le plus petit diamètre intérieur d'appui des boules est voisin de 130 mm. Naturellement, le procédé peut être mis en œuvre avec d'autres caractéristiques dimensionnelles sans s'éloigner du cadre de l'invention telle que définie par les revendications.

L'invention permet de réaliser, grâce au caractère parfaitement continu de la découpe, une économie de fil diamanté 2, et de temps opératoire, tout en garantissant un état de surface très régulier des chants ainsi découpés au niveau du plateau cristallin 10 obtenu à la fin des opérations. Le parachèvement par polissage, bien connu de l'homme du métier, n'est pas traité ici.

Avantageusement, on effectue la préparation de chaque boule 1 en la soumettant à un sablage, ou un microsablage, ou un microbillage, ou similaire, puis en la nettoyant avec de l'alcool ou un autre solvant pour éliminer toute graisse et particule solide, de façon à ce que le fil diamanté 2 ne rencontre pas de particule susceptible d'accélérer son usure.

Selon l'invention, après le collage des boules 1 sur l'âme sacrificielle 4, on insère l'ensemble collé 5, ainsi réalisé, dans une enveloppe 6, servant de moule, dans laquelle on surmoule cet ensemble collé 5 avec un enrobage 7 tel qu'une résine époxy, ou similaire, de viscosité particulière, qu'on laisse polymériser pendant au moins 24 heures sous refroidissement pour un maintien à température sensiblement constante, pour réaliser un ensemble surmoulé 8. Ce refroidissement peut être effectué avec un ruissellement d'eau froide à la température ambiante, il permet d'éviter une trop haute température du produit d'enrobage, et, ainsi, d'éviter des tensions génératrices d'hétérogénéités.

Ensuite, selon l'invention, après polymérisation du produit d'enrobage 7, notamment de la résine époxy, on ôte l'ensemble surmoulé 8, ainsi réalisé, de son enveloppe, laquelle est avantageusement recyclable, et on le tempère pendant au moins 12 heures à une température comprise entre 40°C et 50°C, pour obtenir le tambour provisoire 3.

L'opération de découpe proprement dite s'applique donc à ce tambour provisoire 3 : on tronçonne le tambour provisoire 3, par avance radiale du fil de découpe 2 vers l'axe principal DP, au moins jusqu'à la position de séparation, pour constituer des ébauches d'anneaux tronçonnés 9.

On achève la séparation de ces anneaux tronçonnés 9 par découpe de l'âme sacrificielle 4, par tournage ou par un autre usinage à l'outil, ou autre.

On élimine ensuite l'enrobage 7 de résine époxy ou similaire des anneaux tronçonnés 9, par montée en température et/ou trempage dans un fluide chauffé et/ou dans un appareil de tonnelage ou similaire, pour libérer des plateaux cristallins 10 à deux faces parallèles. L'élimination de la colle peut être réalisée en même temps, ou dans une opération séparée, notamment de montée en température, selon les matériaux choisis pour l'enrobage et pour le collage.

L'invention procure une économie notable de fil diamanté 2, une maîtrise d'un temps de découpe réduit, et elle garantit l'obtention de plateaux cristallins 10 avec deux faces principales bien parallèles, et avec un état de surface très régulier.

## Revendications

1. Procédé de découpe d'au moins une boule cristalline (1) au fil diamanté (2), selon lequel on détermine un axe de boule (DB) perpendiculairement auquel on choisit de trancher ladite au moins une boule (1) avec un rayon de boule (RB), et où on entraîne ladite boule (1) autour d'un axe principal (DP) parallèle audit axe de boule (DB), et où on tend et entraîne un fil de découpe (2) selon un segment de droite dans un plan perpendiculaire audit axe principal (DP), où on réalise un tambour provisoire (3) immobilisant ladite au moins une boule (1) en position par rapport audit axe principal (DP) pendant toute l'opération de découpe, au cours de laquelle on fait passer ledit axe de boule (DB) de part et d'autre dudit segment de droite pendant la découpe de ladite au moins une boule (1) au sein dudit tambour provisoire (3), où on réalise ledit tambour provisoire (3) sur la base d'une âme sacrificielle (4) constituée par un tube ou cylindre axial, d'axe de révolution confondu avec ledit axe principal (DP), et de rayon égal à la différence entre ladite excentricité (E) et ledit rayon de boule (RB), sur laquelle âme sacrificielle (4) on colle, après préparation, chaque dite boule (1) de façon orientée et avec son axe de boule (DB) parallèle audit axe principal (DP), pour réaliser un ensemble collé (5), où, après collage desdites boules (1) sur ladite âme sacrificielle (4), on insère ledit ensemble collé (5) dans une enveloppe (6) dans laquelle on surmoule ledit ensemble collé (5) avec un matériau d'enrobage (7) ou une résine époxy de viscosité particulière, qu'on laisse polymériser pendant au moins 24 heures sous refroidissement pour un maintien à température sensiblement constante, pour réaliser un ensemble surmoulé (8), et où après polymérisation dudit matériau d'enrobage (7) ou de ladite résine époxy, on ôte ledit ensemble surmoulé (8) de ladite enveloppe (6), et on tempère ledit matériau d'enrobage ou ladite résine pendant au moins 12 heures à une température comprise entre 40°C et 50°C, pour obtenir ledit tambour provisoire (3).

2. Procédé de découpe selon la revendication 1, **caractérisé en ce qu'**on effectue ladite préparation de chaque dite boule (1) en la soumettant à un sablage ou un microsablage ou un microbillage, puis en la nettoyant avec de l'alcool ou un autre solvant pour éliminer toute graisse et particule solide,

3. Procédé de découpe selon la revendication 1 ou 2, **caractérisé en ce que** ledit axe principal (DP) est distant dudit axe de boule (DB) d'une excentricité (E) supérieure audit rayon de boule (RB), **en ce qu'**on tend et entraîne ledit fil de découpe (2) entre une position d'accostage où ledit fil de découpe (2) est distant dudit axe principal (DP) d'une valeur égale à la somme de ladite excentricité (E) et dudit rayon de boule (RB), et une position de séparation où ledit fil de découpe (2) est distant dudit axe principal (DP) d'une valeur égale à la différence entre ladite excentricité (E) et ledit rayon de boule (RB).

4. Procédé de découpe selon l'une des revendications 1 à 3, **caractérisé en ce qu'**on réalise ledit tambour provisoire (3) agencé pour la découpe simultanée d'une pluralité de dites boules (1) chacune agencée radialement de la même façon par rapport audit axe principal (DP).

5. Procédé de découpe selon l'une des revendications 1 à 4, **caractérisé en ce qu'**on tronçonne ledit tambour provisoire (3) par avance radiale dudit fil de découpe (2) vers ledit axe principal (DP) au moins jusqu'à ladite position de séparation, pour constituer des ébauches d'anneaux tronçonnés (9).

6. Procédé de découpe selon la revendication 5, **caractérisé en ce qu'**on achève la séparation desdits anneaux tronçonnés (9) par découpe de ladite âme sacrificielle (4) par tournage ou par un autre usinage à l'outil.

7. Procédé de découpe selon la revendication 6, **caractérisé en ce qu'**on élimine ledit matériau d'enrobage (7) ou ladite résine époxy desdits anneaux tronçonnés (9), par montée en température et/ou trempage dans un fluide chauffé et/ou dans un appareil de tonnelage, pour libérer des plateaux cristallins (10) à deux faces parallèles.

## Patentansprüche

1. Verfahren zum Schneiden mindestens einer Kristallkugel (1) mit Diamantdraht (2), bei dem eine Kugelachse (DB) bestimmt wird, senkrecht zu der ein Schnitt der mindestens einen Kugel (1) mit einem Kugelradius (RB) gewählt wird, und wobei die Kugel (1) um eine Hauptachse (DP) parallel zur Kugelachse (DB) angetrieben wird, und wobei ein Schneiddraht (2) entlang eines geraden Segments in einer Ebene senkrecht zu der Hauptachse (DP) gespannt und angetrieben wird, wobei eine provisorische Trommel (3) gebildet wird, die die mindestens eine Kugel (1) in ihrer Position in Bezug auf die Hauptachse (DP) während des gesamten Schneidvorgangs unbeweglich macht, in dessen Verlauf die Kugelachse (DB) auf beiden Seiten des geraden Segments während des Schneidens der mindestens einen Kugel (1) innerhalb der provisorischen Trommel (3) vorbeibewegt wird, wobei die provisorische Trommel (3) auf Basis eines Opferkerns (4) gebildet wird, der gebildet ist aus einem axialen Rohr oder Zylinder mit rotationssymmetrischer Achse, die mit der Hauptachse (DP) zusammenfällt, und mit einem Radius, der gleich der Differenz zwischen der Exzentrizität (E) und dem Radius (RB) der Kugel ist, wobei auf den Opferkern (4) nach der Vorbereitung jede Kugel (1) ausgerichtet und so, dass die Kugelachse (DB) parallel zu der Hauptachse (DP) verläuft, geklebt wird, um eine geklebte Gesamtheit (5) herzustellen, wobei nach dem Kleben der Kugeln (1) auf den Opferkern (4) die geklebte Gesamtheit (5) in eine Hülle (6) eingesetzt wird, in der die geklebte Gesamtheit (5) mit einem Umhüllungsmaterial (7) oder mit einem Epoxidharz mit bestimmter Viskosität übergossen wird, das während mindestens 24 Stunden unter Abkühlung polymerisiert wird, um eine im Wesentlichen konstante Temperatur aufrechtzuerhalten, um eine Gesamtüberformung (8) zu bilden, und wobei nach der Polymerisation des Umhüllungsmaterials (7) oder des Epoxidharzes die Gesamtüberformung (8) aus der Hülle (6) entfernt wird und das Hüllmaterial oder das Harz für mindestens 12 Stunden auf einer Temperatur zwischen 40 °C und 50 °C gehalten wird, um die provisorische Trommel (3) zu erhalten.

2. Schneidverfahren nach Anspruch 1, **dadurch gekennzeichnet, dass** die Vorbereitung jeder Kugel (1) dadurch erfolgt, dass sie einer Sandstrahl- oder Mikrosandstrahl- oder Mikrokugelstrahlbehandlung unterzogen wird, und dann mit Alkohol oder mit einem anderen Lösungsmittel gereinigt wird, um jegliches Fett und jegliche feste Partikel zu entfernen.

3. Schneidverfahren nach Anspruch 1 oder 2, **dadurch gekennzeichnet, dass** die Hauptachse (DP) von der Kugelachse (DB) um eine Exzentrizität (E) beabstandet ist, die größer als der Kugelradius (RB) ist, dass der Schneiddraht (2) zwischen einer Anlegeposition, in der der Schneiddraht (2) von der Hauptachse (DP) um einen Wert beabstandet ist, der gleich der Summe aus der Exzentrizität (E) und dem Kugelradius (RB) ist, und einer Trennposition, in der der Schneiddraht (2) von der Hauptachse (DP) um einen Wert beabstandet ist, der gleich der Differenz zwischen der Exzentrizität (E) und dem Kugelradius (RB) ist, gespannt und angetrieben wird.

4. Schneidverfahren nach einem der Ansprüche 1 bis 3, **dadurch gekennzeichnet, dass** die provisorische Trommel (3) zum Schneiden mehrerer Kugeln (1) gleichzeitig ausgelegt ist, von denen jede auf die gleiche Weise radial in Bezug auf die Hauptachse (DP) angeordnet ist.

5. Schneidverfahren nach einem der Ansprüche 1 bis 4, **dadurch gekennzeichnet, dass** die provisorische Trommel (3) durch radialen Vorschub des Schneiddrahts (2) in Richtung der Hauptachse (DP) mindestens bis zur Trennposition in Teilstücke zerlegt wird, um in Teilstücke zerlegte Ringrohlinge (9) zu bilden.

6. Schneidverfahren nach Anspruch 5, **dadurch gekennzeichnet, dass** die Trennung der in Teilstücke zerlegten Ringe (9) durch Schneiden des Opferkerns (4) durch Drehen oder durch eine andere Werkzeugbearbeitung erreicht wird.

7. Schneidverfahren nach Anspruch 6, **dadurch gekennzeichnet, dass** das Umhüllungsmaterial (7) oder das Epoxidharz der in Teilstücke zerlegten Ringe (9) durch Erhöhen der Temperatur und/oder Tauchen in einem erhitzten Fluid und/oder in einer Taumelvorrichtung entfernt wird, um Kristallplatten (10) mit zwei parallelen Flächen freizugeben.

## Claims

1. Method for cutting at least one crystal boule (1) using diamond wire (2), wherein there is determined a boule axis (DB), perpendicularly to which it is chosen to cut said at least one boule (1) with a boule radius (RB), and said boule (1) is driven about a main axis (DP) parallel to said boule axis (DB), and a cutting wire (2) is held taut and driven along a straight segment in a plane perpendicular to said main axis (DP), wherein there is made a temporary drum (3) which immobilises said at least one boule (1) in position with respect to said main axis (DP) throughout the entire cutting operation, during which said boule axis (DB) is made to pass on either side of said straight segment during the cutting of said at least one boule (1) inside said temporary drum (3), wherein said temporary drum (3) is based on a sacrificial core (4) formed by an axial tube or cylinder, whose axis of revolution coincides with said main axis (DP), and whose radius is equal to the difference between said eccentricity (E) and said boule radius (RB), on which sacrificial core (4) is bonded, after preparation, each said boule (1) oriented with its boule axis (DB) parallel to said main axis (DP), to form a bonded assembly (5), wherein, once said boules (1) are bonded onto said sacrificial core (4), said bonded assembly (5) is inserted into an envelope (6) inside which said bonded assembly (5) is overmoulded with a coating material (7) or an epoxy resin with particular viscosity, which is left to cure for at least 24 hours under cooling to maintain a substantially constant temperature, to form an overmoulded assembly (8), and wherein, after curing of said coating material (7), said overmoulded assembly (8) is removed from said envelope (6), and said coating material or said resin is tempered for at least 12 hours at a temperature comprised between 40°C and 50°C, to obtain said temporary drum (3).

2. Cutting method according to claim 1, **characterised in that** said preparation of each said boule (1) is carried out by subjecting said boule to sandblasting or micro sandblasting or micro peening, then cleaning it with alcohol or another solvent to remove any grease and solid particles.

3. Cutting method according to claim 1 or 2, **characterised in that** said main axis (DP) is separated from said boule axis (DB) by an eccentricity (E) greater than said boule radius (RB), **in that** said cutting wire (2) is held taut and driven between a soft approach position, wherein the distance separating said cutting wire (2) from said main axis (DP) has a value equal to the sum of said eccentricity (E) and said boule radius (RB), and a separation position, wherein the distance separating said cutting wire (2) from said main axis (DP) has a value equal to the difference between said eccentricity (E) and said boule radius (RB).

4. Cutting method according to one of claims 1 to 3, **characterised in that** said temporary drum (3) is arranged for the simultaneous cutting of a plurality of said boules (1), each arranged radially in the same manner with respect to said main axis (DP).

5. Cutting method according to claims 1 to 4, **characterised in that** said temporary drum (3) is sliced, by advancing said cutting wire (2) radially towards said main axis (DP), at least up to said separation position, to form blanks of cut rings (9).

6. Cutting method according to claim 5, **characterised in that** the separation of said cut rings (9) is finished by cutting off said sacrificial core (4) by turning or another tool machining.

7. Cutting method according to claim 6, **characterised in that** said coating material (7) or said epoxy resin is removed from said cut rings (9) by increasing temperature and/or soaking in a heated fluid and/or in a tumbling device, to release crystalline plates (10) with two parallel faces.
